# EUROPEAN PATENT APPLICATION

(11) **EP 2 816 424 A1**
(43) Date of publication of application: **24.12.2014**
(21) Application number: 13425086.9
(22) Date of filing: 20.06.2013
(51) Int. Cl.: G05B 19/042, G05B 19/05

(54) **Method and apparatus for controlling an industrial process**

(71) Applicant: Gefran S.p.A., 25050 Provaglio d'Iseo (Brescia) (IT)
(72) Inventor: Chinello, Adriano, I-28041 Arona, Novara (IT); Rosa, Stefano, I-25013 Carpenedolo, Brescia (IT)
(74) Representative: Mozzi, Matteo

(57) **Abstract**

The invention relates to a method and an apparatus for controlling an industrial process. Such method comprises the steps of:
- cyclically providing to an electronic processing module (10) a plurality of input signals (S1, S2,..., Sn), each indicative of a physical parameter associated to the industrial process, to generate a corresponding plurality of output control signals (T1, T2,..., Tm). The electronic processing module (10) is operatively associated to an input/output electronic module (20) for the signals arranged in a distal position from the electronic processing module (10). The method is characterized in that it comprises the further steps of:
- providing for a secondary processing block (40) associated to said input/output electronic module (20);
- providing to the secondary processing block (40) a sub-group (S1,S2) of said input signals;
- providing to the secondary processing block (40), by the electronic processing module (10), a first signal (S_{REF}) indicative of thresholds (REF1,REF2) associated to said sub-group of input signals (S1,S2), and a second signal (S_{T1*}) indicative of a preset value (T1*) for a first control signal (T1) to be outputted;

- enabling, by the electronic processing module (10), said secondary processing block (40);
- comparing, by the secondary processing block (40), said sub-group of input signals (S1,S2) to the corresponding thresholds (REF1,REF2);
- setting, by the secondary processing block (40), said first output control signal (T1) on the preset value (T1*) in response to the detection of a passing-through event of the corresponding thresholds (REF1, REF2) by the signals of the input sub-group (S1,S2).

## Description

### Application field

The present invention generally relates to a method for controlling an industrial process and a relative control apparatus. More particularly, the invention relates to an electronic apparatus comprising a programmable logic controller (or PLC) configured to control, preferably, but not limited to, a process of injection molding and the related method for controlling such process.

### Prior art

Industrial control systems used to control and monitor the industrial processes often use programmable logic controllers, or PLC. As it is known, the PLC are special computers that operate, based on control programs stored in corresponding memories, generally, to read inputs indicative of the temporal evolution of parameters of the controlled industrial processes to provide outputs to the same processes based on the logic of the corresponding control programs. The processing power and memory capacities of the PLC have been quickly grown in the recent years.

PLCs differ from conventional computers in two main aspects. First, the PLCs operate to generate highly reliable and predictable control outputs. In fact, the architecture and programming of the PLC are the result of a design aimed to provide predictable maximum response time, as well as a decrease of the errors due to performing conditions and a sensitive detection of hardware and communication errors. Secondly, compared to the conventional computers, PLCs are highly customizable, so as to adapt to the needs of special industrial processes to be controlled.

In PLCs for industrial uses of a known type, the input reading steps, for example, through input/output boards located remote to the PLC and connected to the latter by a communication line, the processing step of such inputs for generating outputs for implementing the controlled industrial processes are cyclically repeated during time intervals typically of a duration of some milliseconds.

One limitation of the PLC of a known type is that such time intervals for processing the inputs for implementing the corresponding outputs, also referred to as cycle times, or Tc, of the PLC, have sometimes an excessive duration for many industrial applications. Particularly, the Applicant assessed that cycle times Tc for controlling of the order, for example, of 2 ms are unacceptable in applications such as the control of the speed/pressure switching of hydraulic injection molding presses. For such application, the proper result of the machining process is strictly related to an accurate monitoring and the rapid change of significant parameters of the process itself, for example, the speed of the injection axis of the press and/or the pressure generated within the moulding chamber, in response to the occurrence of passing-through events of preset thresholds by such parameters. In other words, the higher accuracy required by the current qualitative standards for the above-mentioned operations could be achieved only by decreasing the reaction times of the PLC to values well below the above-mentioned typical cycle time. However, this would involve the use of very fast PLC, having a higher power consumption and an excessive cost in comparison to the tasks to be performed.

The object of the present invention is to devise and provide a method for controlling an industrial process and a corresponding control apparatus that comprises, particularly, a programmable logic controller or PLC, having characteristics that allow at least partially overcome the drawback set forth above of the PLC of the known solutions.

Such object is achieved by a control method in accordance with claim 1. Alternative embodiments of the above-mentioned method are defined in the dependent claims 2-17.

It is the object of the present invention also an electronic apparatus for controlling an industrial process in accordance with claim 18.

### Brief description of the drawings

Further characteristics and advantages of the above-mentioned method for controlling an industrial process and of the corresponding control apparatus will be apparent from the description set forth below of a preferred implementation example, given by way of indicative, non-limiting example, with reference to the appended figures, in which:
- Fig. **1** shows a block diagram of an electronic apparatus for controlling an industrial process in accordance with the invention;
- Figs. **2A-2D** show as a function of time trends of electric signals managed by the electronic control apparatus of Fig. 1, in a first exemplary embodiment of the method of the invention;
- Figs. **3A-3D** show as a function of time trends of electric signals managed by the electronic control apparatus of Fig. 1, in a second exemplary embodiment of the method of the invention;
- Fig. **4** illustrates a flow diagram of the method for controlling an industrial process of the invention.

### Detailed description

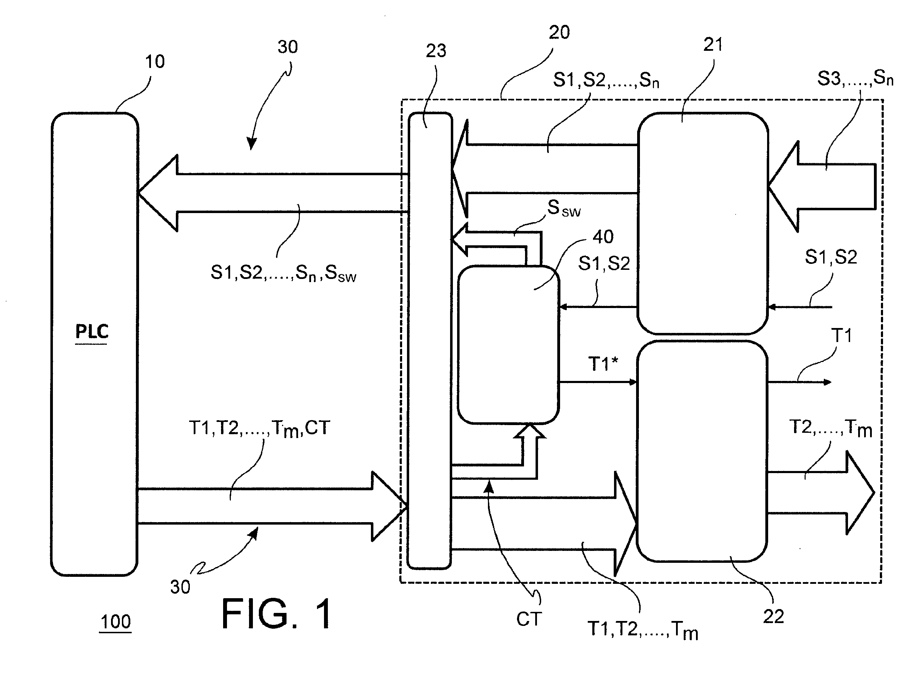

Referring to the above-mentioned Fig. 1, with 100 is indicated a block diagram of an electronic control apparatus of a general industrial process in accordance with the invention on the whole. For sake of brevity, herein below, such electronic control apparatus 100 will be referred to as control apparatus or simply apparatus.

Although the teachings of the present invention can be applied to the control of a general industrial process, the embodiments described for the apparatus 100 and the related control method are particularly advantageous for the control of the speed/pressure switching of hydraulic presses for injection molding, as it will be pointed out below.

The control apparatus 100 comprises, particularly, an electronic module 10 for cyclically processing a plurality of input signals S1, S2, S3, ..., Sn to the apparatus. Each of such input signals S1, S2, S3, ..., Sn is indicative of a physical parameter associated to the industrial process to be controlled and is detected, for example, through a suitable sensor. In a preferred embodiment, such input signals S1, S2, S3, ..., Sn are analog signals. In alternative embodiments, such input signals S1, S2, S3, ..., Sn comprise at least partially also digital signals, or they are only digital signals.

At each processing cycle, the electronic processing module 10 is configured to implement corresponding outputs T1, T2, ..., Tm of the apparatus 100, i.e., it is configured to provide a plurality of output control signals T1, T2..., Tm, each corresponding to the result of processing operations performed on one or more of the input signals S1, S2, S3, ..., Sn.

For example, processing operations that can be performed by the electronic processing module 10 comprise temperature measurements, comparisons of one of the input signals to a corresponding preset threshold and similar processing operations.

In a preferred embodiment, such output control signals T1, T2,..., Tm are analog signals. In other embodiments, such output signals T1, T2,..., Tm may comprise at least partially also digital signals, or they are only digital signals.

In an embodiment, the electronic processing module 10 comprises a programmable logic controller, or PLC, or a general industrial PC. Generally, a PLC comprises a central processing unit (CPU), for example, a microprocessor or microcontroller, memories of the volatile (RAM) and non-volatile type (ROM, EPROM, EEPROM, Flash), of input/output boards for digital and analog signals, communication boards to communicate with other devices of the industrial plant. In the present invention, reference is made to a standard PLC, which will not be described in more detail herein below.

It shall be noticed that the programmable logic controller or PLC 10 represents a main processing element of the control apparatus 100 of the industrial process of the invention.

Furthermore, it shall be noticed that the cyclic processing of the above-mentioned input signals S1, S2, S3, ..., Sn for implementing the corresponding output control signals T1, T2,..., Tm is completed during a cycle interval Tc of the control apparatus 100, having a duration, for example, of 1-2 ms.

In addition, the electronic apparatus 100 comprises an input/output electronic module 20 of the above mentioned input signals S1, S2,..., Sn and output signals T1,..., Tm illustrated in Fig. 1 within the dashed box. Such input/output module 20 or electronic board for the signals is arranged in a distal position from the programmable logic controller 10, and it is connected to the latter by communication means for digital signals 30. Such communication means 30 comprise, for example, a communication channel comprising a digital bus, of the field bus or local bus type. Such digital bus 30 is schematically illustrated in Fig. 1 by two arrows having opposite directions, each indicative of the transfer of digital signals towards the programmable logic controller 10 and from the latter to the input/output electronic module 20.

In more detail, the input/output electronic module 20 of the signals comprises a input electronic block 21 configured to receive the above mentioned input signals S1, S2, S3, ..., Sn to be transferred towards the digital bus 30 and then towards the programmable logic controller 10. For example, such input electronic block 21 is accomplished in an analog input front-end provided with a relative analog-digital converter in the case that the input signals S1, S2, S3, ..., Sn to the apparatus 100 are analog signals.

Furthermore, the input/output electronic module 20 comprises an output electronic block 22 configured to provide the above mentioned output signals T1, T2, ..., Tm generated by the PLC 10 towards corresponding actuators of the industrial plant to be controlled. Particularly, such output electronic block 22 is accomplished in an output analog front-end provided with a relative digital-analog converter in the case that the output control signals T1, T2, ..., Tm provided to the actuators are analog signals.

In addition, the input/output electronic module 20 of the signals comprises a respective digital interface block 23, for example, a standard interface, with the above-mentioned digital bus 30 to transfer the digitalized input signals S1, S2..., Sn from the input electronic block 21 to the programmable logic controller 10, and vice versa, to send the digitalized output control signals T1,..., Tm from the programmable logic controller 10 to the output electronic block 22.

Furthermore, the input/output module 20 of the control apparatus 100 advantageously comprises an auxiliary processing block 40, including, for example, a microprocessor or a programmable logic, of the FPGA (Field Programmable Gate Array) or PLD (Programmable Logic Device) type. Such auxiliary processing block 40 represents a secondary processing element of the control apparatus 100 arranged in a distal position from the PLC 10 in the proximity of the input 21 and output 22 blocks of the control signals.

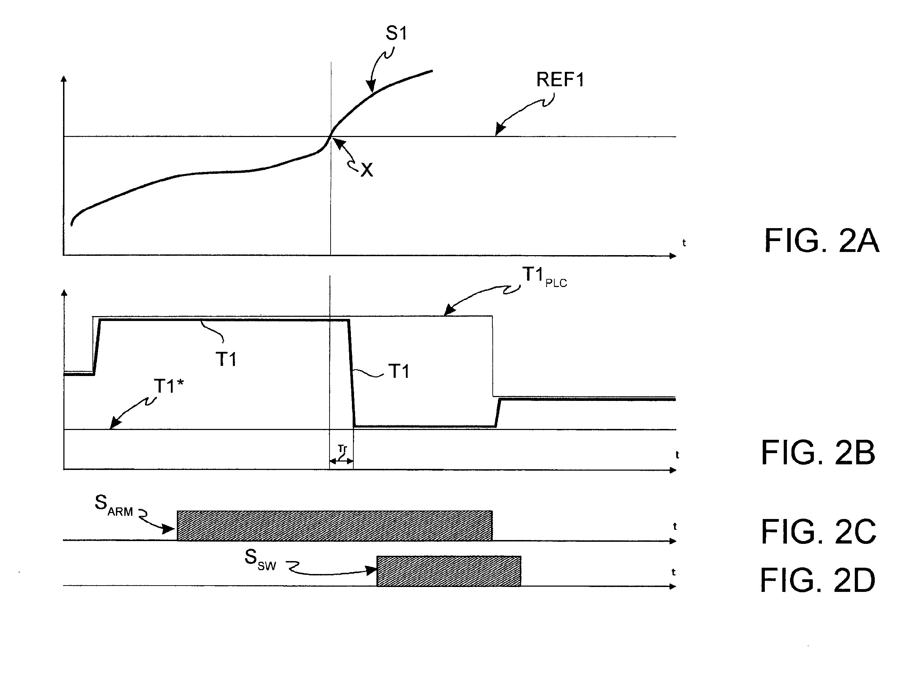

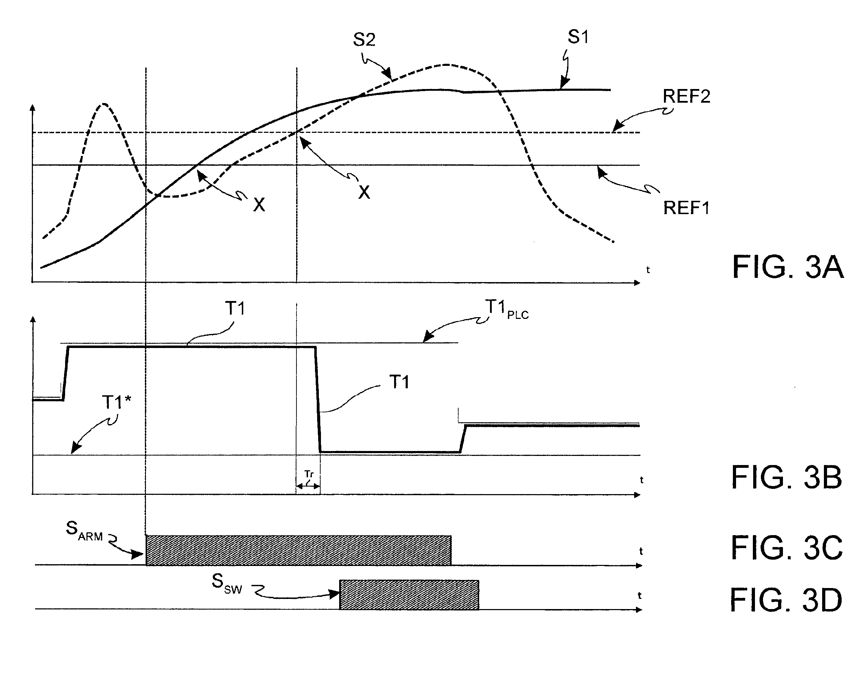

With reference to Fig. 1, the secondary processing block 40 is configured to receive in input a sub-group of the above mentioned input signals S1, S2..., Sn digitalized by the input electronic block 21. In a first example, with reference to Fig. 2A, the secondary processing block 40 is suitable to receive from the input electronic block 21 a single input signal S1. It shall be noticed that such signal S1 is sent, together with the other input signals S2, ..., Sn, also to the PLC 10. In a second example, with reference to Fig. 3A, the secondary processing block 40 is suitable to receive, in addition, also a second input signal, i.e., it receives both the first S1 and the second S2 input signal.

Advantageously, with reference to the first example of Figs. 2A, 2B, the secondary processing block 40 is configured for setting or adjusting a first output control signal T1 on a preset value T1* in response to the detection of a passing-through event of a corresponding threshold REF1 by the single input signal S1. Similarly, with reference to the second example of the Figs. 3A and 3B, the secondary processing block 40 is configured for setting the first output control signal T1 on the preset value T1* in response to the detection of a passing-through event of a corresponding first REF1 and second REF2 thresholds by the first S1 and the second S2 input signals, respectively.

It shall be noticed that, with reference to Figs. 2A and 3A, in the following of the present description the term threshold is used to designate a signal that is constant over time. With reference to the same figures, by the term passing a threshold through or passing-through of a threshold by a signal, is meant that such signal varies upon time, passing from values below the threshold to values above the same threshold, and vice versa.

In addition, the secondary processing block 40 is configured to receive from the interface block 23 a plurality of digital signals generated by the programmable logic controller 10 and sent on the digital bus 30 towards the input/output electronic module 20 for the signals. In more detail, such digital signals, generally indicated in Fig. 1 by the arrow indicated by the reference CT, comprise:
- a first signal S_{RMF} indicative of the thresholds to be intercepted by the signals of the input signal sub-group S1, S2, particularly the first REF1 and the second REF2 thresholds of the above mentioned examples;
- a second signal S_{T1*} indicative of the preset value for the first control signal T1 to be outputted by the control apparatus 100;
- a third signal S_{ARM} of the binary type (logic 0 or 1) generated by the programmable logic controller 10 for enabling/disabling the secondary processing block 40. In an implementation example, with reference to Figs. 2C and 3C, such third binary signal S_{ARM} takes the logic value 1 to enable the secondary processing block 40, and the logic value 0 for disabling it;
   - a fourth signal S_{UD} indicative of a piece of information of time derivative on the signals S1, S2 of the input sub-group upon the passing-through of the corresponding thresholds REF1, REF2. In other words, the piece of information provided by such fourth signal S_{UD} indicates whether the input signal intercepts the corresponding threshold upon a time change from a lower value to a higher one (in response to a signal change in an increasing direction) or from a higher value to a lower one (in response to a signal change in a decreasing direction).

Still with reference to Fig. 1 and Figs. 2D and 3D, the secondary processing block 40 is configured to enable and send towards the programmable logic controller 10, through the front-end block 23 and the bus 30, a fifth binary signal or switchover signal S_{SW} following the occurrence of the passing-through event of the preset thresholds REF1, REF2 by the signals of the input sub-group S1,S2. For example, such switchover signal S_{SW}, once enabled, takes the logic value 1 to come back to the logic value 0 when the programmable logic controller 10 brings the third signal S_{ARM} to the logic value 0 disabling the secondary processing block 40. Typically, this occurs within 2-3 cycle times Tc from when the switchover signal S_{SW} took the logic value 1.

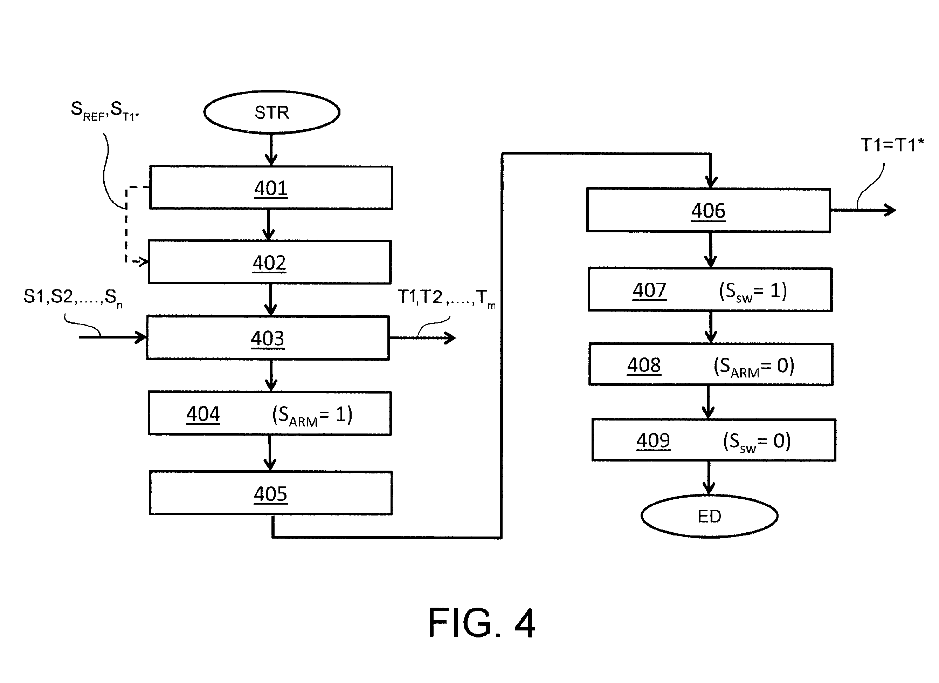

From the above-mentioned structural and functional characteristics of the electronic control apparatus 100, with reference to the flow diagram of Fig. 4, herein below a preferred embodiment of the method for controlling an industrial process of the invention will be described. To this aim, reference will be made also to the trends upon time of signals of the Figs. 2A-2D, 3A- 3D, in which elements equal or similar to those mentioned above relative to Fig. 1 are indicated by the same references.

Particularly:
- Fig. 2A shows a trend upon time of the first input analog signal S1 and the first preset threshold REF1;
- Fig. 2B shows a trend upon time of the first output control signal T1, a output signal value T1_{PLC} set by the PLC 10 for each processing cycle and for each output of the apparatus 100, and the value preset T1* to be set on the first output T1 following the passing-through event of the first threshold REF1;
- Fig. 2C shows a time trend of the third signal S_{ARM};
- Fig. 2D shows a trend upon time of the switchover signal S_{SW}.

Similarly:
- Fig. 3A shows a trend upon time of the first S1 and second S2 input analog signals and of the preset first REF1 and second REF2 thresholds;
- Fig. 3B shows a trend upon time of the first output signal T1, of the value T1_{PLC} of the output signal set by the PLC 10 for each processing cycle for each output of the apparatus 100 and the value T1* to be set on the first output upon the occurrence of a passing-through of the above-mentioned threshold values REF1, REF2;
- Fig. 3C shows a time trend of the third binary signal S_{ARM};
- Fig. 3D shows a trend upon time of the switchover signal S_{SW}.

It shall be noticed that, advantageously, the embodiments of the inventive method are set in coded algorithms of a computer program stored, for example, in a suitable memory of the PLC 10.

The inventive method comprises a symbolic start step STR corresponding to a start step of a processing cycle of the PLC 10.

Subsequently, the method comprises a step of determining 401 setting values for the parameters to be controlled by the PLC 10. Such step 401 is, for example, programmable, and the PLC 10 is configured to set in real time: the thresholds to be passed through; the passing-through direction of such thresholds (in an increasing or decreasing direction) by the input analog signals sent to the apparatus 100; the analog value of the outputs set by the PLC 10 during the processing cycle and the analog value to be set on the first output T1 following the passing-through event of the thresholds.

It shall be noticed that by the phrase "setting in real time", it is meant that the PLC 10 is configured to generate automatically and in deterministic terms the current values set for the function to be controlled based on the operative parameters of the industrial process.

Subsequently, the method provides a step of sending 402 by the PLC 10 of the above-mentioned setting values to the secondary processing block 40 associated to the input/output electronic module 20 of the signals arranged in a distal position from the PLC 10. In more detail, with reference to the described embodiment, such step provides the step of providing to the secondary processing block 40 the first signal S_{REF} indicative of the thresholds REF1,REF2 associated to the sub-group of input signals S1,S2 to be controlled, and the second signal S_{T1*} indicative of the value T1* preset for the first control signal T1 to be outputted.

The method further provides a step of providing to the PLC 10 the plurality of input signals S1, S2,..., Sn to generate the corresponding plurality of output control signals T1, T2,..., Tm. With reference to the example of the Figs. 2B and 3B, in such step, the first output T1 takes a value equal to the value T1_{PLC} set by the PLC 10. With reference to the described embodiment, such step comprises the further step of providing 403 to the secondary processing block 40 the sub-group of the input signals, i.e., the single signal S1 or both the first S1 and the second S2 input signals.

Subsequently, the method provides a step of enabling 404, by the PLC 10, the secondary processing block 40. As stated above, this occurs by enabling the third signal S_{ARM}, for example, making so that such binary signal takes the logic value 1.

At this point, the method provides a control start step 405 of the signals of the input sub-group S1,S2 by the secondary processing block 40 and of comparing with the corresponding thresholds REF1,REF2.

In an embodiment, such step 405 comprises a further changing step, by the PLC 10, of the setting values sent to the secondary processing block 40, based on the operative parameters of the industrial process, also in the enabling step of the block 40. For example, the PLC 10 is configured to change the values of the thresholds REF1,REF2 associated to the sub-group of input signals S1,S2 and the value T1* preset for a first output control signal T1 to make them available to the secondary processing block 40 during the enabling step of such block.

In response to the detection of a passing-through event of the thresholds REF1,REF2 by the signals of the input sub-group S1,S2, the secondary processing block 40 sets (step 406 of Fig. 4) the first output control signal T1 on the preset value T1*. In the Figs. 2A and 3A, such passing-through event is schematically illustrated by the points X of the diagrams. In other words, the control of the above-mentioned first output T1 is taken by the secondary processing block 40.

Particularly, with reference to the example of Fig. 2A, in which a single input signal S1 is sent to the secondary processing block 40, the above-mentioned step 406 is implemented following the detection of the passing-through event of the first threshold REF1 by such single input signal S1.

With reference to the example of Fig. 3A, in which the sub-group of the input signals comprises both the first S1 and the second S2 input signals, the step 406 is implemented based on a Boolean combination of the passing-through events of the first REF1 and of the second REF2 thresholds by the above-mentioned signals. For example, the step 405 can be implemented following the passing-through of both the above-mentioned thresholds REF1, REF2 by the two input signals S1, S2, in accordance with a logic of the AND type, as shown in the Figs. 3A-3B. Alternatively, the step 405 can be implemented following the passing-through of any of the two thresholds by the relative input signal, in accordance with a logic of the OR type.

In each case, with reference to Figs. 2B and 3B, the Applicant experimentally assessed that the above-mentioned step 406 is carried out during a second time interval or reaction time to the event Tr having a duration that is less than that of the first time interval Tc. In more detail, such second time interval has, for example, a duration of about 200 µsec.

Furthermore, a jitter value JR of the reaction time Tr experimentally assessed, that, as it is known, is indicative of the variability of the reaction time in diverse responses to passing-through events, is less than or equal to about 60 µsec.

Following the occurrence of the above-mentioned step 406, the method comprises an additional step 407 in which the secondary processing block 40 generates the fifth signal or switchover signal S_{SW} of the binary type sent to the PLC 10. For example, the secondary processing block 40 generates a switchover signal S_{SW} that takes the logic value 1 to indicate to the PLC the occurrence of the passing-through event of the thresholds REF1, REF2 in the above described modes.

Once the above-mentioned switchover signal S_{SW} has been received, the PLC 10 proceeds to disenable (step 408) the secondary processing block 40, particularly making so that the third binary signal S_{ARM} takes the logic value 0. For example, such step is implemented after a time interval of 2-3 cycle times Tc from the end of said setting step of the first output T1.

In such manner, o the method ensure a rapid return to the complete control of the apparatus 100 by the PLC 10 following the passing-through event of the threshold X.

The method further provides the step 409 in which the switchover signal S_{SW} is brought back to the logic value 0.

The algorithm relative to the inventive method symbolically ends with an end step ED.

In the case that the industrial process to be controlled is the handling of hydraulic presses of injection molding machines, and assuming that the first S1, the second S2 input signals, and the first output signal T1 are analog signals:
- the first input signal S1 can be assimilated to the signal, provided by a position sensor, which is indicative of the position of the injection axis,
- the second input signal can be assimilated to the signal, provided by a pressure sensor, which is indicative of the pressure trend in the moulding chamber upon the handling of the injection axis,
- the first output signal T1 represents the desired pressure set-point value.

The method for controlling an industrial process and the corresponding control apparatus 100 of the present invention have many advantages.

In fact, the experimental results related to the duration of the second time interval Tr, i.e., of the reaction time of the control apparatus 100 in response to the threshold passing-through event, pointed out that, with the present invention such reaction time is about of 200µsec, i.e., ten-fold less than the typical cycle time Tc=1-2msec of the known PLCs.

In such a manner, the apparatus 100 and the inventive method ensure a more rapid intervention following the occurrence of threshold passing-through events and, consequently, a higher accuracy in a number of operations according to what is required by the current quality standards.

Furthermore, the inventive method ensures a substantially real-time programmability of the parameters involved by the PLC 10. Particularly, the invention ensures the possibility to dynamically customize such parameters to the current values of the signals of interest, for example, pressure values relative to the above-mentioned application example. Particularly, the proposed method allows cyclically changing the output value T1* by the PLC 10 and setting it on the secondary processing block 40. In such a manner, it is ensured that the value actually implemented by such block 40 after a passing-through of the threshold is the one calculated by the PLC 10 a few milliseconds before the event.

In addition, transferring to the secondary processing block 40, i.e., a processing element delocalized from the PLC 10 by a bus 30, the control of the response of the apparatus 100 to the passing-through event of the threshold, avoids burdening the data exchange between the PLC and the signal input/output module 20, while allowing to use in the apparatus 100 PLCs 10 that are less efficient in terms of cycle times and, therefore, less expensive.

Such PLCs 10 have also lower power dissipations, therefore have less stringent requirements in terms of heat dissipation. This allows, for example, to use PLCs of the fan-less type having a high reliability, and requiring less measures for heat dissipation within electric cabinets.

This is translated, while keeping performances constant, in a decrease of the overall cost of the control apparatus 100 and in an increase of the overall reliability thereof.

To the embodiments of the method and of the control apparatus described above, those of ordinary skill in the art, in order to meet contingent needs, will be able to make modifications, adaptations, and replacements of elements, with functionally equivalent other ones, without departing from the scope of the following claims. Each of the characteristics described as belonging to a possible embodiment can be carried out independently from the other embodiments described.

## Claims

1. A method for controlling an industrial process, comprising the steps of:
- cyclically providing (401) to an electronic processing module (10) a plurality of input signals (S1, S2,..., Sn) each indicative of a physical parameter to be controlled associated to the industrial process to generate a corresponding plurality of output control signals (T1, T2,..., Tm), said electronic processing module (10) being operatively associated to an electronic module (20) of input/output for said signals arranged in a distal position from said electronic processing module (10), the method being **characterized in that** it comprises the further steps of:
- providing for a secondary processing block (40) associated to said input/output electronic module (20);
- providing (403) a sub-group (S1,S2) of said input signals to the secondary processing block (40);
- providing (402) to the secondary processing block (40), by the electronic processing module (10), a first signal (S_{REF}) indicative of thresholds (REF1,REF2) associated to said sub-group of input signals (S1,S2) and a second signal (S_{T1*}) indicative of a preset value (T1*) for a first control signal (T1) to be outputted;
- enabling (404), by the electronic processing module (10), said secondary processing block (40);
- comparing (405), by the secondary processing block (40), said sub-group of input signals (S1,S2) to the corresponding thresholds (REF1,REF2);
- setting (406), by the secondary processing block (40), said first output control signal (T1) on the preset value (T1*) in response to the detection of a passing-through event of the corresponding thresholds (REF1, REF2) by the signals of the input sub-group (S1,S2).

2. The control method according to claim 1, wherein said sub-group of input signals comprises a single input signal (S1), and said setting step (406) of the first output control signal (T1) on the preset value (T1*) is implemented following the detection of the passing-through event of the threshold (REF1) by said single signal.

3. The control method according to claim 1, wherein said sub-group of input signals comprises a first (S1) and a second (S2) input signal, said setting step (406) of the first output control signal (T1) on the preset value (T1*) being carried out based on a Boolean combination of the passing-through events of the corresponding thresholds (REF1, REF2) by said signals.

4. The control method according to claim 1, wherein said enabling step (404) of the secondary processing block (40) comprises a step of generating, by the electronic processing module (10), a third signal (S_{ARM}) of the binary type sent to said secondary processing block (40) .

5. The control method according to claim 4, wherein said third binary signal (S_{ARM}) takes the logic value 1 to enable the secondary processing block (40).

6. The control method according to claim 2, wherein said providing step (402) further comprises the step of providing to the secondary processing block (40) a fourth signal (S_{UD}) indicative of a piece of information of time derivative of the single input signal (S1) upon the passing-through of the corresponding threshold (REF1).

7. The control method according to claim 3, wherein said providing step (402) further comprises the step of providing to the secondary processing block (40) a fourth signal (S_{UD}) indicative of a piece of information of time derivative of said first (S1) and second (S2) input signals upon the passing-through of the corresponding thresholds (REF1, REF2).

8. The control method according to claim 1, further comprising a step of generating (407), by the secondary processing block (40), a fifth signal (S_{SW}) of the binary type sent to said electronic processing module (10) following the occurrence of said passing-through event of the thresholds (REF1, REF2) by the signals of the input sub-group (S1,S2).

9. The control method according to claim 8, wherein said fifth binary signal (S_{SW}) takes the logic value 1 following the occurrence of said passing-through event of the thresholds (REF1, REF2).

10. The control method according to claim 4, further comprising a disabling step (408), by the electronic processing module (10), of the secondary processing block (40) following the occurrence of said passing-through event of the corresponding thresholds (REF1, REF2), the third binary signal (S_{ARM}) taking the logic value 0 to disable said secondary processing block (40).

11. The control method according to claim 1, wherein each processing cycle of the electronic module (10) has a duration equal to a first time interval (Tc), said step (405) of setting the first output control signal (T1) on the preset value (T1*) being carried out during a second time interval (Tr) having a duration that is less than said first time interval (Tc).

12. The control method according to claim 11, wherein said first time interval (Tc) has a duration of about 1-2 msec.

13. The control method according to claim 11, wherein said second time interval (Tr) has a duration of about 200 µsec.

14. The control method according to claim 1, further comprising a step of determining (401), by the electronic processing module (10), initial setting values for the physical parameters of the process to be controlled.

15. The control method according to claim 14, wherein said step of determining (401) comprises the step of automatically generating, by the electronic processing module (10), current values set for the function to be controlled based on the operative parameters of the industrial process.

16. The control method according to claim 1, wherein said step of comparing (405) comprises the further step of changing, by the electronic processing module (10), the values of the thresholds (REF1,REF2) associated to the sub-group of input signals (S1,S2) and the preset value (T1*) for a first output control signal (T1) to make them available to the secondary processing block (40) during the enabling step of said block.

17. The control method according to any of the preceding claims, wherein said plurality of input signals (S1, S2, ..., Sn) and said plurality of output control signals (T1, T2,..., Tm) comprise signals selected from the group consisting in:
- analog signals,
- digital signals,
- a combination of analog and digital signals.

18. An electronic apparatus (100) for controlling an industrial process, comprising:
- an electronic processing module (10) suitable to cyclically processing a plurality of input signals (S1, S2,..., Sn), each being indicative of a physical parameter associated to the industrial process to generate a corresponding plurality of output control signals (T1, T2,..., Tm);
- an input/output electronic module (20) of said plurality of signals arranged in a distal position from said electronic processing module (10);
- digital signal communication means (30) to electrically connect the electronic processing module (10) and the input/output electronic module (20) of the signals,
wherein said input/output electronic module (20) comprises a secondary processing block (40), said apparatus being configured to carry out the method according to at least one of the preceding claims 1-17.

19. The control electronic apparatus (100) according to claim 18, wherein said secondary processing block (40) comprises, for example, a microprocessor or a programmable logic, of the FPGA or PLD type.

20. The control electronic apparatus (100) according to claim 18, wherein said electronic processing module (10) comprises a programmable logic controller or an industrial PC.

21. The control electronic apparatus (100) according to claim 18, wherein said communication means (30) for digital signals comprise a digital bus, for example, of the field bus or local bus type.
